# EUROPÄISCHE PATENTSCHRIFT

(11) **EP 4 293 998 B1**
(45) Veröffentlichungstag und Bekanntmachung des Hinweises auf die Patenterteilung: **22.07.2026**
(21) Anmeldenummer: 22178651.0
(22) Anmeldetag: 13.06.2022
(51) Int. Cl.: H04N 1/60

(54) **VERFAHREN ZUM DRUCK EINES DEKORS AUF EIN TRÄGERMATERIAL**
METHOD FOR PRINTING A DECORATION ON A SUBSTRATE
PROCÉDÉ D'IMPRESSION D'UN DÉCOR SUR UNE MATIÈRE PORTEUSE

(43) Veröffentlichungstag der Anmeldung: 20.12.2023
(73) Patentinhaber: SWISS KRONO Tec AG, 6004 Luzern (CH)
(72) Erfinder: DICKE, Sebastian, 16868 Bantikow (DE)
(74) Vertreter: Maikowski & Ninnemann Patentanwälte Partnerschaft mbB

(56) Entgegenhaltungen:
- EP-A1- 3 470 972
- WO-A1-2022/086527
- US-A1- 2005 063 016

## Beschreibung

Die Erfindung betrifft ein Verfahren zum digitalen Drucken eines Dekors auf ein Trägermaterial mit mindestens einem Satz definierter Druckparameter. Das Verfahren umfasst die Schritte
i. Bereitstellen eines analogen Dekors;
ii. Erzeugen und Speichern mindestens eines digitalen Bildes in Form von digitalen Dekorrohdaten im RGB-Farbraum vom analogen Dekor;
iii. Digitale Bearbeitung zumindest eines Teils der digitalen Dekorrohdaten im RGB-Farbraum und erzeugen von bearbeiteten digitalen Dekorrohdaten;
iv. Bereitstellen mindestens eines Satzes von Druckparametern;
v. Übergabe der bearbeiteten digitalen Dekorrohdaten und des mindestens einen Satzes von Druckparametern an eine Colormanagement oder RIP-Software und Berechnung von farbraumprofilierten Produktionsdaten für den mindestens einen Satz von Druckparametern aus den bearbeiteten digitalen Dekorrohdaten;
vi. Berechnung von Separationsdaten aus den für den mindestens einen Satz von Druckparametern berechneten farbraumprofilierten Produktionsdaten;
vii. Ausgabe eines digitalen Bildes des analogen Dekors mit den berechneten Separationsdaten durch einen Digitaldrucker auf ein Trägermaterial, wobei der Digitaldrucker von dem mindestens einen Satz von Druckparametern für den die farbraumprofilierten Produktionsdaten berechnet wurden, umfasst ist.

Für die Herstellung von Dekoren, insbesondere für Fußbodenpaneele, Möbelbauteilen oder Arbeitsplatten werden üblicherweise Druckzylinder im Tiefdruckverfahren eingesetzt. Ein Druckdekor entsteht dabei in der Regel aus einem digitalisierten analogen Dekor welches als Echtmaterial wie z.B. Holz vorliegt. Die digitalen Daten des analogen Dekors also dessen digitale Abbilder werden üblicherweise durch Scannen oder digitale Fotografie erzeugt. Diese Abbilder werden aufgrund der Rot/Grün/Blau Sensoren in digitalen Kameras bzw. Scannern im RGB Farbraum erfasst und gespeichert. Der RGB-Farbraum ist ein additiver Farbraum, der Farbwahrnehmungen durch das additive Mischen der Grundfarben Rot, Grün und Blau nachbildet. Um diesen digitalen RGB-Dekordatensatz auf einen Druckzylindersatz mit mehreren Einzelfarben zu übertragen, müssen die Daten für die Einzelfarben mit denen gedruckt werden soll separiert werden.

Mittlerweile setzt sich im Dekordruck neben den historisch gewachsenen Tiefdruck zunehmend auch der Digitaldruck durch. Beim Digitaldruck wird das Druckmuster direkt von einem Computer in einen Digitaldrucker wie z.B. ein Laserdrucker oder Tintenstrahldrucker übertragen. Im Digitaldruck sind daher keine statischen Druckformen notwendig, womit eine Limitierung in der Druckdatenlänge und Druckdatenbreite der Druckmuster entfällt. Der Digitaldruck bietet damit eine hohe Flexibilität und Variabilität hinsichtlich der Druckmotive und bringt keinerlei Einschränkungen im Rapport mit sich. Rapport bezeichnet im Druck ein ständig wiederkehrendes gleiches Druckmuster.

Eines der bekanntesten Farbmodelle ist das CMYK-Farbmodel, welches die Grundfarben Cyan, Magenta, Gelb und Schwarz für den Druck verwendet. Das CMYK-Farbmodel ist ein subtraktives Farbmodel, wobei die Abkürzung CMYK für die drei Farbbestandteile Cyan, Magenta, Yellow und den Schwarzanteil Key als Farbtiefe steht. Mit diesem Farbsystem lässt sich ein Farbraum (Gamut) abbilden, der vielen Anforderungen aus verschiedensten Bereichen genügt. Verwendet ein Digitaldrucker das CMYK-Farbmodell, weist der Digitaldrucker entsprechend 4 Farbkanäle auf, nämlich einen Farbkanal für Cyan, einen Farbkanal für Magenta, einen Farbkanal für Yellow und einen Farbkanal für Key.

Gemäß dem Stand der Technik werden die digitalen Daten farbraumprofiliert. Hierbei werden die für den Druck relevanten Druckparameter, wie
- Art der Druckanlage (darin umfasst Druckgeschwindigkeit, Druckkopfeigenschaften, usw.);
- Farbmodell mit dem gedruckt werden soll (z.B. 4-Farbkanalruckanlage, 5-Farbkanaldruckanlage, Verwendung von Sonderfarben usw.);
- Temperatur;
- Luftfeuchte;
- Art/Charge der Drucktinte;
- Art/Charge des Trägermaterials, welches Bedruckt wird;
- Vorbehandlung des Trägermaterials (z.B. durch Grundierung);
berücksichtigt.

Die Druckparameter bestimmen dabei den Farbraum, der im Druck dargestellt werden kann. Der Farbraum beschreibt die Gesamtheit der Farben, die mit den gegebenen Druckerparametern darstellbar sind. Grundsätzlich ist der Farbraum der farbraumprofilierten Produktionsdaten, also der digitalen Daten nach der Farbraumprofilierung kleiner als der RGB-Farbraum, in dem die digitalen Daten des analogen Dekors vorliegen, da der Farbraum durch die Druckparameter eingeschränkt wird.

Die Art der Drucktinte verändert das Erscheinungsbild der gedruckten Farben z.B. aufgrund der in der Tinte enthaltenen Pigmente. Darüber hinaus weisen bereits verschiedene Chargen der gleichen Drucktinten Unterschiede im Erscheinungsbild beim Druck auf. Das Gleiche gilt für das Trägermaterial, auf welches gedruckt wird. Unter ansonsten gleichen Druckparametern, wird ein Druck auf einer Holzwerkstoffplatte ein anderes Erscheinungsbild haben als ein Druck auf einem Hochglanzpapier. Schon beim Druck auf ein Papier, hängt das Erscheinungsbild der gedruckten Farben vom verwendeten Papier ab, beispielsweise ob ein Papier mit einem Weißton oder gelb/bräunliches Papier verwendet wird. Weiterhin unterschieden sich bereits Papiere verschiedener Hersteller hinsichtlich ihrer Grundfarbe. Das Trägermaterial kann darüber hinaus auf unterschiedlichste Arten vorbehandelt z.B. grundiert werden. Durch das Grundieren, wird wiederum der Hintergrund beim Druck und damit die farbliche Wirkung des Drucks verändert.

Bereits die Wahl der Druckanlage beeinflusst den Farbraum in dem gedruckt werden kann, da verschiedene Druckanlagen unter anderem unterschiedliche Druckgeschwindigkeiten und/oder Druckkopfeinstellungen haben, was wiederum den Farbraum beeinflusst. Weiterhin nutzen verschiedene Drucker unterschiedliche Farbmodelle mit denen gedruckt wird.

Klimatische Bedingungen beim Druck üben ebenfalls einen Einfluss auf den Farbraum aus, so trocknet die Tinte beispielsweise beim Drucken unterschiedlich schnell je nach Temperatur und Luftfeuchtigkeit.

Die farbraumprofilierten Produktionsdaten verschiedener Druckparameter unterscheiden sich daher voneinander und können jeweils in Abhängigkeit von den Druckparametern unterschiedlich große Farbräume abbilden.

Aus den farbraumprofilierten Produktionsdaten werden, für den für den Druck verwendeten digitalen Drucker, Separationsdaten berechnet. Üblicherweise werden in den Druckereibetrieben die separierten Druckdaten, ähnlich wie sie für den Tiefdruck verwendet werden auch für den Digitaldruck verwendet. Zur Anwendung im Digitaldruck werden die Daten eines digitalen Bildes mit einer RIP-Software (raster imaging process, RIP) in ein Format umgerechnet, das von einem Digitaldrucker verarbeitet werden kann. Die RIP-Software separiert die im digitalen Bild enthaltenen Farbinformationen unter anderem in die Farbkanäle, die Bestandteil des Farbmodells des Digitaldruckers sind, der für den Druck verwendet werden soll. Die Ausgabe des digitalen Drucks über den Digitaldrucker erfolgt dann über den Digitaldrucker mit dem entsprechenden Farbmodel. Separationsdaten können beispielsweise mit einer RIP-Software, einer Colormanagement Software oder einer druckerinternen Software berechnet werden.

Die Separationsdaten sind daher ebenso wie die profilierten Produktionsdaten von den Druckparametern abhängig. Insbesondere werden sich die Separationsdaten für den Druck eines Dekors auf verschiedenen Druckanlagen unterscheiden. Unter Druckanlagen sind hierbei Digitaldrucker zu verstehen. Sowohl allein oder in einer Anlage mit weiteren Vorrichtungen z.B. mit Vorrichtungen zum Grundieren und/oder transportieren von Trägermaterialien.

Üblicherweise werden bisher die Separationsdaten aus den farbraumprofilierten Produktionsdaten für einen Druck unter definierten Druckparametern berechnet und anschließend werden diese Separationsdaten digital bearbeitet, um beispielsweise farbliche Anpassungen des Dekors vorzunehmen oder Retuschierungen. Dabei werden die in den Farbkanälen vorliegenden Farbinformationen bearbeitet und verändert.

Die für einen Satz Druckparameter vorliegenden Separationsdaten können jedoch aus den bereits beschriebenen Gründen nicht einfach auf andere Druckparameter angewendet werden. Das heißt, insbesondere können die Separationsdaten nicht einfach für einen andere Druckanlage genutzt werden. Es ist notwendig bei jedem geänderten Druckparameter neue farbraumprofilierte Produktionsdaten und damit neue Separationsdaten zu berechnen und diese Separationsdaten dann wiederum digital zu bearbeiten, so dass erwünschte Retuschierungen umgesetzt werden können, wie z.B. farbliche Anpassungen des Dekors.

Die EP 3 470 972 A1 betrifft ein Verfahren zur Mehrfachnutzung digitaler Druckdaten zur Erzeugung optischer und/oder haptisch hochwertiger Druckdekore auf einem Trägermaterial. In dem Verfahren werden Separationsdaten eines digitalen Druckmotivs erstellt, wobei die Daten der einzelnen Farbkanäle anschließend einzeln bearbeitet werden können, um das digitale Druckmotiv zu retuschieren.

Der bekannte Stand der Technik birgt jedoch zahlreiche Nachteile in sich. Das jeweilige manuelle Separieren der Einzelfarben vor dem Druck mit einem definierten Satz von Druckparametern bedeutet einen großen Zeitaufwand im Produktionsablauf und erhöht dadurch die Produktionskosten. Während die digitalen Daten des analogen Dekors nach ihrer Erstellung im umfangreichen RGB-Farbraum vorliegen, ist der Farbraum des Dekors nach der Berechnung der farbraumprofilierten Produktionsdaten und der Separierung dieser auf Farben und/oder Sonderfarben des im Druck verwendeten Farbmodells eingeschränkt. Die farbraumprofilierten Produktionsdaten sowie die Separationsdaten, die durch die Separierung erzeugt werden, decken einen wesentlich kleineren Farbraum ab als die ursprünglichen digitalen Daten des analogen Dekors im RGB-Farbraum. Insbesondere können nicht auf Basis bereits existierender Separationsdaten für eine erste Druckanlage, Separationsdaten für eine zweite Druckanlage gewonnen werden. In diesem Fall wären im Allgemeinen Einbußen in der Qualität des Druckbildes hinzunehmen.

Liegen beispielsweise Separationsdaten für den Druck mit einem 4-Farbsystem vor. Können diese nicht genutzt werden, um Separationsdaten für den Druck auf einer Druckanlage mit einem 5-Farbsytsem zu berechnen. In diesem Fall müssten Daten mit einem geringeren Informationsgehalt (für 4 Farbkanäle) genutzt werden, um Daten mit einem größeren Informationsgehalt (für 5 Farbkanäle) zu erzeugen. So kann ein gleichbleibender hoher Qualitätsstandard im Druck nicht gewährleistet werden.

Der Erfindung liegt daher die Aufgabe zu Grunde ein Verfahren zum digitalen Drucken von Dekoren zur Verfügung zu stellen, welches möglichst flexibel mit verschiedenen Druckparametern, insbesondere verschiedenen Druckanlagen durchgeführt werden kann und dabei die Nachteile der aus dem Stand der Technik bekannten Verfahren behebt.

Hierfür stellt die Erfindung ein Verfahren gemäß Anspruch 1 zur Verfügung.

### Detaillierte Beschreibung

Gemäß dem erfindungsgemäßen Verfahren wird ein analoges Dekor zur Verfügung gestellt. Als analoge Dekore können grundlegend alle möglichen Materialien dienen, die in der Realität vorliegen und deren Erscheinungsbild als Dekor geeignet ist. Insbesondere Holz-, Fliesen- und Steinoberflächen können als analoge Dekore dienen. Analoge Dekore im Sinne der vorliegenden Erfindung können auch Vorlagen sein, die mittels anderer Drucktechniken wie Tiefdruck, Siebdruck oder auch manueller Techniken erzeugt wurden. Die Dekore sind insbesondere in der Gestaltung von Gestaltung von Laminaten beliebt, die für Boden-, Wand- und/oder Deckenbeläge Verwendung finden.

In einer bevorzugten Ausführungsform wird das erfindungsgemäße Verfahren bevorzugt zum Bedrucken von Trägermaterialien zur Herstellung von Fußbodenlaminaten oder Wand- und Deckenverkleidungselementen verwendet.

Anschließend wird mindestens ein digitales Bild in Form von digitalen Dekorrohdaten im RGB-Farbraum vom analogen Dekor erzeugt und gespeichert. Das mindestens eine digitale Bild und damit die digitalen Dekorrohdaten des analogen Dekors werden in einer Ausführungsform der Erfindung durch Fotografieren des analogen Dekors mit einer digitalen Kamera oder durch Einscannen des analogen Dekors mit einem Scanner erzeugt.

Der RGB-Farbraum ist der größte Farbraum, in dem digitale Bilder bearbeitet werden können und umfasst sämtliche Farbräume, in denen im Digitaldruck gedruckt werden kann.

In einer Ausführungsform können mehrere digitale Bilder des analogen Dekors erzeugt werden. Beispielsweise kann das analoge Dekor unter unterschiedlichen Winkeln, mit unterschiedlichen Kamera- oder Scannereinstellungen fotografiert bzw. gescannt werden. Aus den unterschiedlichen digitalen Bildern kann dann ein Mischbild berechnet werden. Aus dem Stand der Technik ist ebenfalls Software für Scanner bekannt, bei denen ein analoges Dekor in 3 verschiedenen Modi, also unter 3 verschiedenen Bedingungen (Scannereinstellungen, Belichtung o.ä.) gescannt wird und anschließend ein Mischbild erzeugt wird. In dem erfindungsgemäßen Verfahren kann dann das digitale Mischbild digital weiterbearbeitet werden. Das digitale Mischbild stellt dann die digitalen Dekorrohdaten im Sinne der Erfindung dar.

Während des Fotografierens oder Scannens können in einer Ausführungsform durch die Verwendung spezieller Beleuchtungstechniken und die Variation der Position der Kamera oder des Scanners über dem analogen Dekor spezielle Effekte wie Schattierungen erzeugt werden.

Verfahrensgemäß wird zumindest ein Teil der digitalen Dekorrohdaten im RGB-Farbraum digital bearbeitet. Bei der digitalen Bearbeitung zumindest eines Teils der digitalen Dekorrohdaten kann zumindest ein Teil der Dekorrohdaten retuschiert werden. Erfindungsgemäß werden hierdurch bearbeitete digitale Dekorrohdaten erzeugt. Die bearbeiteten digitalen Dekorrohdaten liegen erfindungsgemäß nach wie vor im RGB-Farbraum vor.

In einer Ausführungsform der vorliegenden Erfindung erfolgt die Bearbeitung zumindest eines Teils der digitalen Dekorrohdaten mittels der Software Adobe Photoshop. Prinzipiell sind hierfür aber alle Bildbearbeitungsprogramme oder Graphikbearbeitungsprogramme geeignet, die es ermöglichen digitale Bilddaten im RGB-Farbraum zu bearbeiten, insbesondere zu retuschieren. Das bearbeiten der digitalen Dekorrohdaten kann beispielsweise von einem Nutzer an einem PC mit einer geeigneten Software, wie beispielsweise Adobe Photoshop durchgeführt werden.

Unter Retuschieren wird die nachträgliche Bildbearbeitung der digitalen Dekorrohdaten eines fotografierten oder eingescannten analogen Dekors verstanden. Dabei können
- ein oder mehrere Farbtöne verändert werden; und/oder
- die Helligkeit verändert werden; und/oder
- die Sättigung verändert werden; und/oder
- der Kontrast verändert werden; und/oder
- die Schärfe verändert werden.

Beim Retuschieren kann das Erscheinungsbild des digitalen Bildes, welches durch die digitalen Dekorrohdaten beschrieben wird, beliebig verändert werden. Die im Folgenden genannten Bearbeitungsschritte beziehen sich immer darauf, dass das Erscheinungsbild des digitalen Bildes, welches durch die digitalen Dekorrohdaten beschrieben wird, verändert wird. Hierfür werden die digitalen Dekorrohdaten bearbeitet.

So können beispielsweise Fehler im digitalen Bild behoben werden. Weiterhin kann Staub, der auf dem analogen Dekor beim Digitalisieren vorhanden war, als optische Erscheinung aus dem digitalen Bild und damit den digitalen Dekorrohdaten entfernt werden. Bei Holzdekoren können beispielsweise Astlöcher entfernt, hinzugefügt und/oder verändert werden, z.B. deren Größe. Weiterhin können Rapportierungen erzeugt werden. In einer Ausführungsform werden Dekore, die für Dielen vorgesehene sind, derart bearbeitet, dass im digitalen Bild keine Dielenaufteilung mehr sichtbar ist. Dies hat den Vorteil, dass nach dem Digitaldruck im Rapport, Dielen jeglicher Breite aus dem bedruckten Trägermaterial geschnitten werden können.

Die Schärfe des digitalen Bildes bzw. von Bereichen des digitalen Bildes kann verändert werden. Bereiche können schärfer oder auch unschärfer dargestellt werden. Weiterhin können Lichter und Mitteltöne getrennt voneinander in Farbe und Sättigung verändert werden.

Durch die Retuschierungen ist es möglich Strukturen im digitalen Bild des analogen Dekors besonders zu betonen oder auch weniger deutlich herauszustellen indem beispielsweise die Farbgebung in diesen Bereichen verändert wird. Somit können zum Beispiel Poren in Holzstrukturen, Astlöcher oder ähnliche Zeichnungen in Dekoren betont oder auch nicht betont werden. Insbesondere die Software Adobe Photoshop bietet hier die Möglichkeit, mit Multiplizierungsebenen zu arbeiten. Mit Hilfe dieser Funktion kann eine Dekorebene in der Software kopiert und über einer anderen Dekorebene angeordnet werden. Die obere Dekorebene kann dabei transparent dargestellt werden, vorteilhafterweise erscheint die darunter liegende Dekorebene dadurch optisch verstärkt.

Beim Retuschieren kann weiterhin die Farbgebung verändert werden. Beispielsweise können in einem monofarbigen Dekor unterschiedliche Farbbereiche erzeugt werden, wodurch das gesamte digitale Bild des analogen Dekors mehr Dynamik bekommt. Andersherum können auch in farblich besonders dynamischen digitalen Bildern eines analogen Dekors Farben reduziert oder angepasst werden und dem digitalen Bild des analogen Dekors damit ein ruhigerer Eindruck verliehen werden.

Weiterhin ist es möglich, geometrische Operationen wie Drehungen, Spiegelungen oder auch eine Umgruppierung bestimmter Teile des digitalen Bildes vorzunehmen.

Die digitalen Dekorrohdaten können so den Kundenwünschen optimal angepasst werden. Vorteilhafterweise wird diese Bearbeitung im größtmöglichen zur Verfügung stehenden Farbraum, nämlich dem RGB-Farbraum durchgeführt. Somit steht die maximale Menge an Daten zur Verfügung, die bearbeitet werden können.

In einer Ausführungsform des erfindungsgemäßen Verfahrens wird nicht nur ein Teil der Dekorrohdaten bearbeitet, sondern die gesamten Dekorrohdaten. Hierdurch wird es möglich Retuschierungen vollflächig für das gesamte digitale Bild durchzuführen oder aber auch nur für ausgewählte Teilbereiche des digitalen Bildes.

Durch das Bearbeiten der Dekorrohdaten entsteht folglich ein bearbeitetes digitales Bild des analogen Dekors dessen Erscheinungsbild (optischer Eindruck) im Vergleich zum unbearbeiteten digitalen Bild des analogen Dekors, wie es im Verfahrensschritt ii. erstellt wurde verändert ist.

Erfindungsgemäß wird mindestens ein Satz von Druckparametern zur Verfügung gestellt. Druckparameter sind erfindungsgemäß ausgesucht aus der Gruppe umfassend:
- Art der Druckanlage (darin umfasst Druckgeschwindigkeit, Druckkopfeigenschaften, usw.);
- Farbmodell mit dem gedruckt werden soll (z.B. 4-Farbkanalruckanlage, 5-Farbkanaldruckanlage, Verwendung von Sonderfarben usw.)
- Temperatur;
- Luftfeuchte
- Art/Charge Drucktinte;
- Art/Charge des Trägermaterials, welches Bedruckt wird;
- Vorbehandlung des Trägermaterials (z.B. durch Grundierung).

Die Eigenschaften der Druckparameter zählen zum Stand der Technik und wurden bereits eingangs beschrieben. Ein Satz bezeichnet in diesem Fall eine Zusammenstellung von Druckparametern, wobei für jeden Druckparameter genau ein definierter Wert oder eine definierte Größe vorliegt. In einer Ausführungsform der Erfindung umfasst ein Satz von Druckparameter alle der genannten Druckparameter oder aber eine Auswahl dieser. In einer Ausführungsform der vorliegenden Erfindung werden mehrere Sätze von Druckparametern zur Verfügung gestellt. Prinzipiell könne beliebig viele Sätze von Druckparametern zur Verfügung gestellt werden. In einer Ausführungsform werden 2 bis 10, bevorzugt 2 bis 6, besonders bevorzugt 2 bis 4 Sätze von Druckparametern zur Verfügung gestellt.

Die bearbeiteten digitalen Dekorrohdaten und der mindestens eine Satz von Druckparametern werden an eine Colormanagement oder RIP-Software übergeben und es werden farbraumprofilierte Produktionsdaten für den mindestens einen Satz von Druckparametern aus den bearbeiteten digitalen Dekorrohdaten berechnet.

Wie bereits beschrieben, sind unter Druckanlagen hierbei Digitaldrucker zu verstehen, allein oder in einer Anlage mit weiteren Vorrichtungen z.B. mit Vorrichtungen zum Grundieren und/oder Transportieren von Trägermaterialien. Durch die Druckparameter wird demnach unter anderem festgelegt, mit welchem Digitaldrucker gedruckt werden soll. Unterschiedlich digitale Drucker weisen im Allgemeinen auch unterschiedliche Druckeigenschaften auf. In diesem Schritt wird damit eine Farbraumanpassung vorgenommen, wobei die farbraumprofilierten Produktionsdaten dann nicht länger im RGB-Farbraum vorliegen, sondern in einem kleineren eingeschränkten Farbraum. Bei der Berechnung der farbraumprofilierten Produktionsdaten wird durch die Druckparameter das Farbmodell berücksichtigt, welches vom für den Druck vorgesehenen Digitaldrucker genutzt wird. In einer Ausführungsform der vorliegenden Erfindung werden die farbraumprofilierten Produktionsdaten in einem Farbmodell ausgesucht aus der Gruppe aufweisend CMYK, CRYK, 1-farbige, 5-farbige, 6-farbige, 7-farbige oder auch 8-farbige Farbmodelle berechnet. Die Farbmodelle können dabei auch Sonderfarben aufweisen.

Der beim Drucken zur Verfügung stehende Farbraum wird darüber hinaus durch die weiteren oben bezeichneten Druckparameter beeinflusst. Dies ist dem Fachmann bekannt und wurde bereits erläutert. Durch die Berechnung der farbraumprofilierten Produktionsdaten wird der Einfluss der Druckparameter auf den Farbraum berücksichtigt. In diesem Verfahrensschritt werden die digitalen Daten daher auf den Farbraum beschnitten, der im Druck mit einem Digitaldrucker unter definierten Druckparametern Verwendung findet.

Werden mehrere Sätze von Druckparametern zur Verfügung gestellt, werden in einer Ausführungsform für jeden Satz von Druckparamatern farbraumprofilierte Produktionsdaten erstellt. Erfindungsgemäß liegen dem Erstellen bzw. Berechnen der farbraumprofilierten Produktionsdaten jeweils die bearbeiteten digitalen Dekorrohdaten zu Grunde. Folglich werden die farbtraumprofilierten Produktionsdaten immer ausgehend vom größtmöglichen Farbraum, nämlich dem RGB Farbraum erstellt.

Erfindungsgemäß werden Separationsdaten aus den für den mindestens einen Satz von Druckparametern berechneten farbraumprofilierten Produktionsdaten berechnet. Die Separationsdaten sind dabei eine Zuweisung der Druckdaten zu den einzelnen Druckerköpfen des Digitaldruckers. Dieses Vorgehen ist dem Fachmann bekannt. Die Separationsdaten werden in einer Ausführungsform durch eine Colormanagement, RIP-Software oder druckerinterne Software aus den digitalen Produktionsdaten berechnet.

Erfindungsgemäß wird das bearbeitete digitale Bild des analogen Dekors mit den berechneten Separationsdaten durch einen Digitaldrucker auf ein Trägermaterial ausgegeben, wobei der Digitaldrucker von dem mindestens einen Satz von Druckparametern für den die farbraumprofilierten Produktionsdaten berechnet wurden, umfasst ist.

Erfindungsgemäß wird ein digitales Bild des analogen Dekors mit den Separationsdaten durch mindestens einen Digitaldrucker unter den in dem mindestens einen Satz Druckparametern definierten Druckparametern ausgegeben. Diese Druckparameter entsprechen dabei den Druckparamatern, die bei der Berechnung der farbraumprofilierten Produktionsdaten zu Grunde lagen, aus denen die Separationsdaten berechnet wurden. Die Druckparameter, die der Berechnung der farbraumprofilierten Produktionsdaten und der Separationsdaten zu Grunde lagen, werden folglich auch für den Druck verwendet.

Das Erscheinungsbild des geduckten Dekors auf dem Trägermaterial entspricht erfindungsgemäß dem Erscheinungsbild des bearbeiteten digitalen Bildes, wie es durch die bearbeiteten Dekorrohdaten dargestellt wird.

In einer Ausführungsform der Erfindung werden im Verfahrensschritt vi. jeweils Separationsdaten aus den für den für jeden Satz von Druckparametern berechneten farbraumprofilierten Produktionsdaten berechnet und im Verfahrensschritt vii. wird ein digitales Bild des analogen Dekors mit den jeweils berechneten Separationsdaten durch jeweils einen Digitaldrucker auf ein Trägermaterial ausgegeben. Dabei ist der jeweils eine Digitaldrucker von dem Satz von Druckparametern für den die farbraumprofilierten Produktionsdaten und die jeweiligen Separationsdaten berechnet wurden umfasst. Es werden erfindungsgemäß immer die farbraumprofilierten Produktionsdaten und die daraus berechneten Separationsdaten zugehörig zu einem Satz Druckparameter berechnet und ein digitales Bild wird unter Verwendung eben jener Druckparameter durch die berechneten Separationsdaten ausgegeben.

Vorteilhafterweise können so farbraumprofilierte Produktionsdaten und daraus Separationsdaten für den Druck mit verschiedenen Druckparametern und damit auch für verschiedene digitale Drucker berechnet werden. Es können aber auch z.B. farbraumprofilierte Produktionsdaten und daraus Separationsdaten für den Druck mit dem gleichen Digitaldrucker und Farbmodell, jedoch auf verschiedene Trägermaterialien berechnet werden. Ausgangspunkt sind jeweils die bearbeiteten Dekorrohdaten, die im RGB-Farbraum vorliegen. Die farbraumprofilierte Produktionsdaten und daraus die Separationsdaten können damit vorteilhafterweise immer ausgehend vom größtmöglichen Farbraum berechnet werden.

Gemäß der vorliegenden Erfindung kann eine Grafikabteilung vorteilhafterweise die Retuschierung des digitalen Bildes des analogen Dekors einfach und schnell und damit kostensparend einmalig im RGB-Farbraum vornehmen. Es müssen nicht wie aus dem Stand der Technik bekannt immer wieder die Separationsdaten bearbeitet werden. Die Dekorentwicklungszeiten verkürzen sich dadurch um einige Tage bis hin zu mehreren Wochen, was einen enormen Wettbewerbsvorteil darstellt. Darüber hinaus wird es ermöglicht, schneller auf Kundenwünsche zu reagiert.

Weiterhin müssen die Separationsdaten nicht mehr digital nachbearbeitet werden, wie es im Stand der Technik üblich ist. Die digitalen Dekorrohdaten wurden bereits digital bearbeitet und umfassen damit bereits die gewünschten Retuschierungen des digitalen Bildes des analogen Dekors. Hierdurch kann eine große Zeitersparnis erreicht werden und der Druckprozess kann entsprechend wirtschaftlich effizienter gestaltet werden.

Prinzipiell ist jedes für das Aufbringen eines Druckmediums geeignetes Material als Trägermaterial geeignet. Das Trägermaterial kann dabei eine glatte oder auch eine raue Oberfläche aufweisen, auf die das Druckmedium aufgebracht wird. In einer Ausführungsform der Erfindung ist das Trägermaterial gemäß der vorliegenden Erfindung ausgewählt aus einer Gruppe aufweisend Papier, Glas, Metall, Folien, Holzwerkstoffe, Kunststoffe und Kombinationen dieser, insbesondere mitteldichte Faser (MDF)-Platten, hochdichte Faser (HDF)-Platten, Spanplatten, Grobspanplatten (OSB), Sperrholzplatten und Holz-Kunststoffplatten (WPC), Furniere, Lackschichten, Kunststoffplatten, faserverstärktem Kunststoff, Hartpapier und anorganische Trägerplatten.

In einer bevorzugten Ausführungsform weist das Trägermaterial zumindest eine flächige Form auf, welche mit den erfindungsgemäßen Druckformen bedruckt werden kann.

Geeignete Trägermaterialien können daher beispielsweise Laminate, Möbelplatte, Fronten von Möbeln, Arbeitsplatte, Türfronten, Tapeten, Papiere und Glasflächen sein. Das Trägermaterial kann dabei eine glatte Oberfläche aufweisen oder aber auch eine strukturierte Oberfläche.

In einer Ausführungsform der vorliegenden Erfindung wird auf die zu bedruckende Seite des Trägermaterials vor dem Bedrucken mindestens eine Grundierungsschicht aufgetragen. Insbesondere bei der Verwendung von Holzwerkstoffplatten als Trägermaterial wird in einer Ausführungsform des vorliegenden Verfahrens auf die zu bedruckende Seite der Holzwerkstoffplatte vor dem Bedrucken mit dem digitalen Bild mindestens eine Grundierungsschicht umfassend mindestens ein Harz und/oder mindestens einen Lack aufgetragen, die anschließend angetrocknet und/oder angehärtet wird.

Weiterhin kann die Grundierung mindestens ein Additiv und/oder mindestens einen Zuschlagstoff aufweist. Geeignete Additiv sind ausgewählt aus der Gruppe aufweisend Härter, Netzmittel (Tenside oder Mischungen davon) und Trennmittel. Geeignete Zuschlagsstoffe sind ausgewählt aus der Gruppe aufweisend leitfähige Substanzen und Zellulose. Die leitfähigen Substanzen können ausgewählt sein aus der Gruppe enthaltend Russ, Kohlefasern, Metallpulver und Nanopartikel, insbesondere Kohlenstoffnanoröhren.

Vorzugsweise wird die zu bedruckende Seite des Trägermaterials, insbesondere einer Holzwerkstoffplatte vor dem Auftragen der Grundierung angeschliffen.

Zur Grundierung kann eine wässrige Harzlösung und/oder eine strahlenhärtbare Spachtelmasse auf die zu bedruckende Seite des Trägermaterials aufgetragen werden. Als Grundierungsmittel sind z.B. wässrige Harzlösungen wie Melamin-Formaldehyd-Harz, Harnstoff-Formaldehyd-Harz oder Melamin-Harnstoff-Formaldehyd-Harz einsetzbar. Es ist ebenfalls möglich, das Trägermaterial mit 1K/2K-Acrylat-, UV- und/oder ESH-Spachtel vorzubeschichten bzw. zu grundieren und anschließend diese Grundierungsschicht entsprechend auszuhärten.

Vorzugsweise wird für die Vorbeschichtung bzw. Grundierung des Trägermaterials, insbesondere einer Holzwerkstoffplatte eine wässrige Harzlösung verwendet, die eine wässrige Harzlösung, insbesondere eine wässrige Lösung eines Melamin-Formaldehyd-Harzes, Harnstoff-Formaldehyd-Harzes oder Melamin-Harnstoff-Formaldehyd-Harz.

Die Auftragsmenge an flüssiger Harzlösung zur Grundierung kann zwischen 10 und 80 g/m², bevorzugt 20 und 50 g/m² betragen. Der Feststoffgehalt der wässrigen Harzlösung liegt zwischen 30 und 80%, bevorzugt 40 und 60%, insbesondere bevorzugt bei 55%. Das Flüssigharz kann zusätzlich geeignete Netzmittel, Härter, Trennmittel und Entschäumer aufweisen.

Nach Auftragen der wässrigen Harzlösung auf das Trägermaterial zur Vorbeschichtung bzw. Grundierung derselbigen wird das Flüssigharz auf eine Feuchte von 10%, bevorzugt 6% z.B. in einem Konvektionsofen oder Nahinfrarot-Ofen getrocknet.

In einer anderen Ausführungsform des vorliegenden Verfahrens kann das Trägermaterial, insbesondere eine Holzwerkstoffplatte mit 1K/2K-Acrylat-, und/oder ESH-Spachtel vorbeschichtet bzw. grundiert werden. Eine UV-Spachtelmasse besteht vorteilhafterweise im Wesentlichen aus UV-härtbaren Lackkomponenten, Pigmenten, Reaktivverdünner und Radikalbildnern als Kettenstarter.

Die Auftragsmenge der Spachtelmasse kann in diesem Fall 50 bis 150 g/m², bevorzugt 50 bis 100 g/m² betragen. Die Mengenangaben beziehen sich dabei auf eine 100%ige Spachtelmasse.

Ebenfalls ist es möglich, dass die zur Grundierung verwendete Spachtelmasse pigmentiert vorliegt, wodurch das Druckergebnis variiert oder verbessert werden kann.

Besonders bevorzugt gemäß der Erfindung ist die Vorbeschichtung des Trägermaterials mit einer transparenten Grundierung.

In einer weiteren Ausführungsform des vorliegenden Verfahrens wird vor dem Bedrucken der mindestens einen Seite des Trägermaterials, insbesondere einer Holzwerkstoffplatte mindestens eine Schicht einer pigmentierten Grundierung, die vorzugsweise wasserbasiert ist, auf die zu bedruckende Seite des Trägermaterials aufgetragen. Die pigmentierte Grundierung kann entweder direkt auf die unbehandelte Oberfläche des Trägermaterials oder auch auf die vorherige, vorzugsweise transparente Grundierung aufgetragen werden.

Die wasserbasierte pigmentierte Grundierung kann auch in mehr als einer Schicht aufgetragen werden (z.B. 3 bis 10 Schichten, bevorzugt 5 bis 8 Schichten, besonders bevorzugt 7 Schichten), wobei nach jedem Schichtauftrag die pigmentierte Grundierung z.B. in einem Konvektionstrockner oder einem Nahinfrarot-Trockner getrocknet wird. Die wasserbasierte pigmentierte Grundierung enthält vorzugsweise mindestens ein Pigment einer hellen Farbe, besonders bevorzugt mindestens ein Weißpigment.

Weißpigmente sind unbunte anorganische Pigmente mit einem hohen Brechungsindex (größer als 1,8), die vor allem zur Erzeugung von optischer Weiße in Anstrichmitteln oder als Füllstoff in z. B. Kunststoffen verwendet werden. Weißpigmente gemäß der Erfindung können ausgewählt sein aus der Gruppe umfassend Titandioxid, Lithopone, Bariumsulfat, Zinkoxid, Zinksulfid und Calciumsulfat. Lithopone ist ein Weißpigment, das Bariumsulfat und Zinksulfid beinhaltet. Gemäß der Erfindung wird vorzugsweise Titandioxid als Weißpigment in der wasserbasierten pigmentierten Grundierung eingesetzt, da Titandioxid den höchsten Brechungsindex und somit die höchste Deckkraft unter den bekannten Weißpigmenten aufweist.

Das Trägermaterial kann daher vor dem Bedrucken grundiert werden und nach dem Bedrucken können optional eine oder mehrere Schutzschichten, vorzugsweise ein, zwei oder drei Schutzschichten aufgebracht werden. Die mindestens eine Schutzschicht umfasst abriebfeste Partikel, natürliche Fasern, synthetische Fasern und/oder weitere Additive, wobei Harze wie Melamin-Formaldehyd-Harz, Harnstoff-Formaldehyd-Harz, Acrylatharze und Polyurethanharze als geeignete Bindemittel zum Einsatz kommen können.

Die abriebfesten Partikel sind bevorzugt ausgewählt aus der Gruppe enthaltend Aluminiumoxide, Korund, Borcabide, Siliciumdioxide, Siliciumcarbide, silanisierte Korundpartikel und Glaskugeln. Durch das Aufbringen abriebfester Partikel und/oder Glaskugeln kann die Verschleißfestigkeit eines mit einem Dekor und optional einer Struktur versehenen Trägermaterials erhöht werden. Als natürliche und/oder synthetische Fasern, insbesondere Fasern ausgewählt aus der Gruppe enthaltend Holzfasern, Zellulosefasern, Wollfasern, Hanffasern und organische oder anorganische Polymerfasern zum Einsatz.

Als Additive können leitfähige Substanzen, Flammschutzmittel, luminiszierende Stoffe und Metalle zugegeben werden. Dabei können die leitfähigen Substanzen ausgewählt sein aus der Gruppe enthaltend Ruß, Kohlefasern, Metallpulver und Nanopartikel, insbesondere Kohlenstoffnanoröhren. Es können auch Kombinationen dieser Substanzen zum Einsatz kommen. Als Flammschutzmittel werden bevorzugt Phosphate, Borate, insbesondere Ammoniumpolyphosphat, Tris(tri-bromneopentyl)phosphat, Zinkborat oder Borsäurekomplexe von mehrwertigen Alkoholen verwendet. Als luminiszierende Stoffe werden bevorzugt fluoreszierende und/oder phosphoreszierende Stoffe auf anorganischer oder organischer Basis, insbesondere Zinksulfit und Erdalkalialuminate verwendet.

In einer Ausführungsform der Erfindung wird Papier als Trägermaterial verwendet. Als Druckbasispapier geeignetes Papier ist bevorzugt weiß und hat ein Gewicht von 60 bis 90 g/m², bevorzugt 65 bis 80 g/m², besonders bevorzugt 70 g/m². Das Papier wird vor dem Bedrucken mit einem Primer versehen, um dieses zu grundieren. Geeignete Mittel, die als Primer verwendet werden können, sind dem Fachmann bekannt.

Druckdekore finden beispielsweise Einsatz in der Herstellung von Fußbodenlaminat oder in Form von Wand- und Deckenverkleidungselementen. In diesem Fall ist das Trägermaterial vorzugsweise eine Holzwerkstoffplatte. In einer Ausführungsform der vorliegenden Erfindung ist das Trägermaterial daher eine Holzwerkstoffplatte.

In einer weiteren Ausführungsform des vorliegenden Verfahrens wird das Bedruckte und gegebenenfalls mit einer Schutzschicht, insbesondere aus Formaldehydharzen, versehene Trägermaterial in einer Kurztakt (KT)-Presse weiter bearbeitet bzw. veredelt. In der KT-Presse werden die Harzschichten aufgeschmolzen und der Schichtverbund zu einem Laminat ausgehärtet. Während der Weiterverarbeitung in der KT-Presse können unter Verwendung eines strukturierten Pressbleches auch Oberflächenstrukturen in der Oberfläche des Trägermaterials wie einer Holzwerkstoffplatte erzeugt werden, die optional auf das Dekor abgestimmt ausgeführt sein können (so genannte dekorsynchrone Struktur). Bei Holzdekoren können die Strukturen in Form von Porenstrukturen vorliegen, die der Maserung folgen. Bei vielen Dekoren können die Strukturen Vertiefungen im Bereich von dem Dekor umfasster Fugen Füllungslinien sein.

Im Folgenden wird die vorliegende Erfindung anhand einer Figur und eines Ausführungsbeispiels näher erläutert.

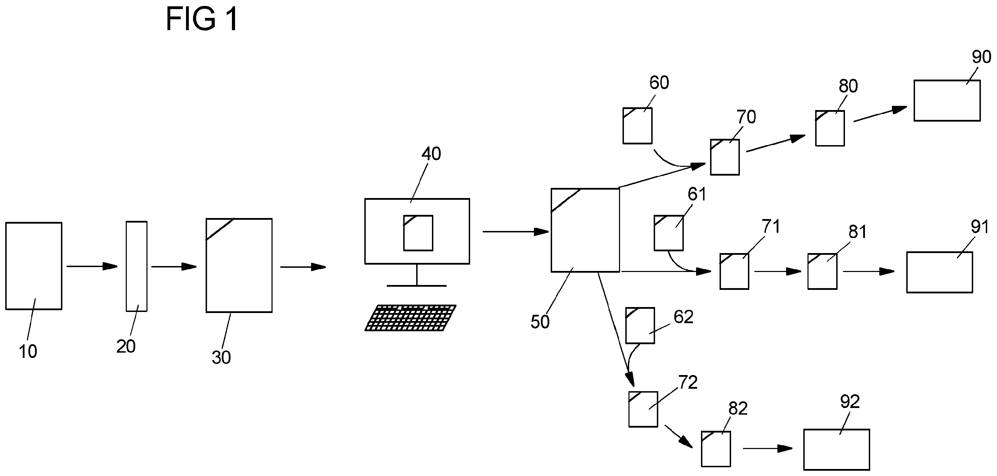

- Figur 1: stellt einen prinzipiellen Ablauf des Verfahrens dar.

Figur 1 stellt einen prinzipiellen Ablauf des erfindungsgemäßen Verfahrens dar. Es wird ein analoges Dekor 10 zur Verfügung gestellt, von welchem durch die Vorrichtung 20 ein digitales Bild erstellt wird, welches in Form von Dekorrohdaten 30 vorliegt. Die Vorrichtung 20 kann erfindungsgemäß beispielsweise eine Digitalkamera oder ein Scanner sein. Die digitalen Dekorrohdaten 30 werden bearbeitet und dabei an einem PC 40 retuschiert, hierdurch entstehen bearbeitete Dekorrohdaten 50. Es werden drei verschiedene Sätze Druckparameter 60-62 zur Verfügung gestellt. Aus den bearbeiteten Dekorrohdaten 50 und jeweils einem Satz von Druckparametern 60-62 werden farbraumprofilierte Produktionsdaten 70-72 berechnet. Aus den farbraumprofilierten Produktionsdaten 70-72 werden dann jeweils Separationsdaten 80-82 berechnet, die anschließend für den Druck auf ein Trägermaterial 90-92 genutzt werden. Der Druck findet jeweils unter den für die Berechnung der farbraumprofilierten Produktionsdaten und der dazugehörigen Separationsdaten verwendeten Druckparameter statt. Dass heißt, der Die farbraumprofilierten Produktionsdaten 70 werden aus den bearbeiteten Dekorrohdaten 50 und den Druckparamatern 60 berechnet. Aus den farbraumprofilierten Produktionsdaten 70 werden die Separationsdaten 80 berechnet und anschließend diese Separationsdaten 80 für den Druck auf das Trägermaterial 90 unter den Druckparamatern 60 verwendet.

Vorteilhafterweise können so farbraumprofilierte Produktionsdaten 70-72 und Separationsdaten 80-82 für verschiedene Sätze von Druckparameter 60-62 erzeugt werden, wobei immer von den bearbeiteten Dekorrohdaten 50 ausgegangen wird. Die bearbeiteten Dekorrohdaten 50 liegen im RGB-Farbraum vor und weisen damit den größtmöglichen Informationsgehalt nach dem Digitalisieren des analogen Dekors 10 auf. Die farbraumprofilierte Produktionsdaten 70-72 und die Separationsdaten 80-82 hingegen liegen für ein Farbmodell, wie beispielsweise das CMYK-Farbmodell vor.

Im Stand der Technik ist es üblich, erst Separationsdaten für bestimmte Druckparameter zu erzeugen, die retuschiert werden und aus diesen ersten retuschierten Separationsdaten dann zweite Separationsdaten für andere Druckparameter zu berechnen. Die zweiten Separationsdaten gehen dabei aus den ersten hervor und basieren daher auch auf dem Farbraum, in dem die ersten Separationsdaten berechnet wurden. Der Farbraum der zweiten Druckparameter kann damit nicht mehr größer sein als der Farbraum der ersten Druckparameter. Bei diesem Vorgehen kann es zu Verlusten in der Farinformation und damit der Druckqualität kommen, wenn z.B. der erste Satz von Druckparameter einen Drucker mit einem 4-Farbsystem umfassen und der zweite Satz von Druckparameter einen Drucker mit einem 5-Farbsystem.

### Ausführungsbeispiel 1

Bei einem Hersteller für Laminatfußbodendielen wurden auf drei verschiedenen Digitaldruckanlagen Dekore für die weitere Verarbeitung zu Dekorpaneelen bedruckt. Für den Druck auf jeder der drei Digitaldruckanlagen lagen damit drei verschiedene Sätze von Druckparameter vor. Zunächst wurde ein Holzbrett aus Buche zur Verfügung gestellt, von welchem mit einer Digitalkamera ein digitales Bild aufgenommen wurde. Das digitale Bild lag damit in Form von digitalen Dekorrohdaten im Sinn der Erfindung vor. Die digitalen Dekorrohdaten wurden hinsichtlich der Schärfe und des Kontrastes retuschiert und es wurden damit bearbeitete Dekorrohdaten 50 erzeugt berechnet.

Die drei verschiedenen Digitaldruckanlagen umfassten zwei baugleiche Papierdigitaldruckanlagen auf denen Dekorpapierrollen mit einem 4-Farbsystem (Druck mit 4 Farben) bedruckt werde. Die dritte Digitaldruckanlage war eine Digitaldruckanlage welche grundierte Holzwerkstoffplatten mittel 5-Farbsystem (Druck mit 5 Farben) bedruckt.

Die Farbräume wurden stark von den Druckparametern beeinflusst. Die weiße Grundierung auf den Holzwerkstoffplatten war wesentlich dunkler als das weiße Papier, wodurch der Farbraum bei ansonsten gleichen Druckparametern für den Druck auf die grundierte Holzwerkstoffplatte an sich erst mal kleiner war.

Der Untergrund der grundierten Holzwerkstoffplatte wies einen um 3-4 geringeren L-Wert im Vergleich zum weißen Papier auf. Dies bewirkte einen um ca. mind. 1/3 kleineren Umfang des Farbraumes. Die hellen leuchtenden Farben wären daher bei einem Druck mit einem 4-Farbsystem (Farbsystem: CYRK) nicht darstellbar gewesen. Um den Farbraum zu erhöhen, wurden daher beim Druck auf die Holzwerkstoffplatte 5 Farben (5-Farbsystem) eingesetzt. Als 5-Farbsystem kam das Farbsystem C Y1 Y2 R K zum Einsatz.

Aus den bearbeiteten Dekorrohdaten 50 wurden für die drei verschiedenen Sätze von Druckparameter 60-62 und damit für jede der drei Digitaldruckanlagen farbraumprofilierte Produktionsdaten 70-72 berechnet, indem die bearbeiteten Dekorrohdaten und die Druckparameter 60-62 an die RIP-Software der jeweiligen Digitaldruckanlagen übergeben wurde. Die farbraumprofilierte Produktionsdaten 70-72 für den Druck mit dem 4-Farbsystem wurden auf Basis der gleichen digitalen bearbeiteten Dekorrohdaten errechnet, wie die farbraumprofilierte Produktionsdaten 70-72 für den Druck mit dem 5-Farbsystem.

Im Folgenden sind die drei Sätze von Druckparametern aufgeführt, für die farbraumprofilierte Produktionsdaten 70-72 berechnet wurden.

| **Druckparameter** | **Satz 1** | **Satz 2** | **Satz 3** |
|---|---|---|---|
| Art der Druckanlage | Papierdigitaldruckanlagen 1 | Papierdigitaldruckanlagen 2 | Digitaldruckanlage zum Bedrucken von Holzwerkstoffplatten |
| Farbmodell | 4-Farbsystem | 4-Farbsystem | 5-Farbsystem |
| | (CYRK) | (CYRK) | (C Y1 Y2 R K) |
| Temperatur | 23°C | 23°C | 30°C |
| Drucktinte | Hersteller 1 | Hersteller 1 | Hersteller 2 |
| Trägermaterial | weißes Papier | weißes Papier | Holzwerkstoffplatte |
| Vorbehandlung des Trägermaterials | Keine | keine | weiß grundiert |

Für den Druck wurden aus den farbraumprofilierte Produktionsdaten 70-72 jeweils Separationsdaten 80-82 berechnet. Der Druck eines digitalen Bildes auf das Trägermaterial konnte für alle drei Sätze von Druckparametern mit einer hohen Qualität durchgeführt werden. Darüber hinaus konnten farbraumprofilierte Produktionsdaten 70-72 und daraus Separationsdaten 80-82 für die verschiedenen Sätze von Druckparametern schnell und effektiv berechnet werden. Geänderte Druckparameter führten nicht zu Verzögerungen bei der Berechnung der Separationsdaten, da diese immer ausgehend von den bearbeiteten Dekorrohdaten berechnet wurden. Hierdurch weist das erfindungsgemäße Verfahren eine höhere Wirtschaftlichkeit auf als die Verfahren aus dem Stand der Technik.

Wären die Separationsdaten für den Druck mit dem 5-Farbsystem aus den Separationsdaten für den Druck mit dem 4-Farbsystem berechnet worden, wie im Stand der Technik üblich, wäre dies für die Qualität der Separationsdaten für den Druck im 5-Farbsystem nachteilig gewesen. Da die Separationsdaten nicht mehr ausgehend vom größtmöglichen Farbraum (RGB-Farbraum, in dem die digitalen Produktionsdaten vorliegen) berechnet worden wären, sondern ausgehend von einem kleineren Farbraum.

### Bezugszeichenliste

- 10: analoges Dekor
- 20: Vorrichtung zum Erstellen eines digitalen Bildes
- 30: Dekorrohdaten
- 40: PC zum retuschieren
- 50: bearbeitet Dekorrohdaten
- 60-62: Satz von Druckparametern
- 70-72: farbraumprofilierte Produktionsdaten
- 80-82: Separationsdaten
- 90-92: Trägermaterial

## Patentansprüche

1. Verfahren zum digitalen Drucken eines Dekors auf ein Trägermaterial mit mindestens einem Satz definierter Druckparameter, wobei das Verfahren die Schritte umfasst
i. Bereitstellen eines analogen Dekors;
ii. Erzeugen und Speichern mindestens eines digitalen Bildes in Form von digitalen Dekorrohdaten im RGB-Farbraum vom analogen Dekor;
iii. Digitale Bearbeitung zumindest eines Teils der digitalen Dekorrohdaten im RGB-Farbraum und erzeugen von bearbeiteten digitalen Dekorrohdaten;
iv. Bereitstellen mindestens eines Satzes von Druckparametern;
v. Übergabe der bearbeiteten digitalen Dekorrohdaten und des mindestens einen Satzes von Druckparametern an eine Colormanagement oder RIP-Software und Berechnung von farbraumprofilierten Produktionsdaten für den mindestens einen Satz von Druckparametern aus den bearbeiteten digitalen Dekorrohdaten, wobei die farbraumprofilierten Produktionsdaten in einem Farbmodell ausgesucht aus der Gruppe aufweisend CMYK, CRYK, 1-farbige, 5-farbige, 6-farbige, 7-farbige und 8-farbige Farbmodelle vorliegen;
vi. Berechnung von Separationsdaten aus den für den mindestens einen Satz von Druckparametern berechneten farbraumprofilierten Produktionsdaten;
vii. Ausgabe eines digitalen Bildes des analogen Dekors mit den berechneten Separationsdaten durch einen Digitaldrucker auf ein Trägermaterial, wobei der Digitaldrucker von dem mindestens einen Satz von Druckparametern für den die farbraumprofilierten Produktionsdaten berechnet wurden, umfasst ist;
wobei die Druckparameter im Verfahrensschritt iv. die Art der Druckanlage, das Farbmodell mit dem gedruckt werden soll, die Temperatur, die Luftfeuchte, die Drucktinte und die Art des Trägermaterials aufweisen.

2. Verfahren gemäß Anspruch 1, **dadurch gekennzeichnet, dass** das Trägermaterial ausgewählt ist aus einer Gruppe aufweisend Papier, Glas, Metall, Folien, Holzwerkstoffe, Kunststoffe und Kombinationen dieser.

3. Verfahren gemäß einem der vorangegangenen Ansprüche, **dadurch gekennzeichnet, dass** im Verfahrensschritt ii. die digitalen Dekorrohdaten durch Fotografieren des analogen Dekors mit einer digitalen Kamera oder durch Einscannen des analogen Dekors mit einem Scanner erzeugt werden.

4. Verfahren gemäß einem der vorangegangenen Ansprüche, **dadurch gekennzeichnet, dass** im Verfahrensschritt iii. beim digitalen Bearbeiten des zumindest einen Teils der Dekorrohdaten diese retuschiert werden.

5. Verfahren gemäß Anspruch 4, **dadurch gekennzeichnet, dass** beim Retuschieren
• der Farbton zumindest eines Teils der Dekorrohdaten verändert wird; und/oder
• die Helligkeit zumindest eines Teils der Dekorrohdaten verändert wird; und/oder
• die Sättigung zumindest eines Teils der Dekorrohdaten verändert wird; und/oder
• der Kontrast zumindest eines Teils der Dekorrohdaten verändert wird; und/oder
• die Schärfe zumindest eines Teils der Dekorrohdaten verändert wird.

6. Verfahren gemäß einem der vorangegangenen Ansprüche, **dadurch gekennzeichnet, dass** im Verfahrensschritt iii. ein Teil oder die gesamten Dekorrohdaten digital bearbeitet werden.

7. Verfahren gemäß einem der vorangegangenen Ansprüche, **dadurch gekennzeichnet, dass** die Bearbeitung zumindest eines Teils der digitalen Dekorrohdaten im Verfahrensschritt iii. mittels der Software Adobe Photoshop erfolgt.

8. Verfahren gemäß einem der vorangegangenen Ansprüche, **dadurch gekennzeichnet, dass** die Druckparameter im Verfahrensschritt iv. weiterhin die Vorbehandlung des Trägermaterials aufweisen.

9. Verfahren gemäß einem der vorangegangenen Ansprüche, **dadurch gekennzeichnet, dass** im Verfahrensschritt v. farbraumprofilierte Produktionsdaten für mehr als einen Satz von Druckparameter berechnet werden.

10. Verfahren gemäß Anspruch 9, **dadurch gekennzeichnet, dass** im Verfahrensschritt vi. jeweils Separationsdaten aus den für jeden Satz von Druckparametern berechneten farbraumprofilierten Produktionsdaten berechnet werden und im Verfahrensschritt vii. das digitale Bild des analogen Dekors mit den jeweils berechneten Separationsdaten durch jeweils einen Digitaldrucker auf ein Trägermaterial ausgegeben wird, wobei der jeweils eine Digitaldrucker von dem Satz von Druckparametern für den die farbraumprofilierten Produktionsdaten und die jeweiligen Separationsdaten berechnet wurden, umfasst ist.

11. Verfahren gemäß einem der vorangegangenen Ansprüche, **dadurch gekennzeichnet, dass** das Trägermaterial vor dem Bedrucken grundiert wird.

12. Verfahren gemäß einem der vorangegangenen Ansprüche, **dadurch gekennzeichnet, dass** das Trägermaterial nach dem Bedrucken mit einer Schutzschicht versehen wird.

13. Verfahren gemäß einem der vorangegangenen Ansprüche, **dadurch gekennzeichnet, dass** das Trägermaterial nach dem Bedrucken einer KT-Presse zugeführt wird.

14. Verfahren gemäß Anspruch 13, **dadurch gekennzeichnet, dass** das bedruckte Trägermaterial in der KT-Presse mit einer Oberflächenstruktur versehen wird.

## Claims

1. Method for digitally printing a decorative pattern onto a substrate material with at least one set of defined printing parameters, wherein the method comprises the steps of
i. providing an analog decorative pattern;
ii. generating and storing at least one digital image, in the form of digital decorative-pattern raw data in the RGB color space, of the analog decorative pattern;
iii. digitally processing at least one part of the digital decorative-pattern raw data in the RGB color space and generating processed digital decorative-pattern raw data;
iv. providing at least one set of printing parameters;
v. transferring the processed digital decorative-pattern raw data and the at least one set of printing parameters to color management or RIP software and computing color space profiled production data for the at least one set of printing parameters from the processed digital decorative-pattern raw data, wherein the color space profiled production data are available in a color model chosen from the group comprising CMYK, CRYK, 1-color, 5-color, 6-color, 7-color, and 8-color color models;
vi. computing separation data from the color space profiled production data computed for the at least one set of printing parameters;
vii. a digital printer outputting a digital image of the analog decorative pattern with the computed separation data onto a substrate material, wherein the digital printer is included in the at least one set of printing parameters for which the color space profiled production data were computed;
wherein the printing parameters in the method step iv. include the type of printing system, the color model to be used for printing, the temperature, the humidity of the air, the printing ink, and the type of substrate material.

2. Method according to claim 1, **characterized in that** the substrate material is selected from a group comprising paper, glass, metal, foils, wood-based materials, plastics materials, and combinations thereof.

3. Method according to either of the preceding claims,
**characterized in that** in the method step ii., the digital decorative-pattern raw data are generated by photographing the analog decorative pattern with a digital camera or by scanning the analog decorative pattern with a scanner.

4. Method according to any of the preceding claims, **characterized in that** in the method step iii., digitally processing the at least one part of the decorative-pattern raw data involves retouching said data.

5. Method according to claim 4, **characterized in that** retouching involves
• changing the color tone of at least one part of the decorative-pattern raw data; and/or
• changing the brightness of at least one part of the decorative-pattern raw data; and/or
• changing the saturation of at least one part of the decorative-pattern raw data; and/or
• changing the contrast of at least one part of the decorative-pattern raw data; and/or
• changing the sharpness of at least one part of the decorative-pattern raw data.

6. Method according to any of the preceding claims, **characterized in that** in the method step iii., a part or all of the decorative-pattern raw data are digitally processed.

7. Method according to any of the preceding claims, **characterized in that** processing at least one part of the digital decorative-pattern raw data in the method step iii. is carried out using the Adobe Photoshop software.

8. Method according to any of the preceding claims, **characterized in that** the printing parameters in the method step iv. further include the pretreatment of the substrate material.

9. Method according to any of the preceding claims, **characterized in that** in the method step v., color space profiled production data are computed for more than one set of printing parameters.

10. Method according to claim 9, **characterized in that** in the method step vi., separation data are respectively computed from the color space profiled production data computed for each set of printing parameters, and in the method step vii., the digital image of the analog decorative pattern with the respectively computed separation data is output onto a substrate material by one digital printer each, wherein each digital printer is included in the set of printing parameters for which the color space profiled production data and the respective separation data were computed.

11. Method according to any of the preceding claims, **characterized in that** the substrate material is primed before printing.

12. Method according to any of the preceding claims, **characterized in that** the substrate material is provided with a protective layer after printing.

13. Method according to any of the preceding claims, **characterized in that** the substrate material is fed to a short-cycle press after printing.

14. Method according to claim 13, **characterized in that** the printed substrate material is provided with a surface structure in the short-cycle press.

## Revendications

1. Procédé pour l'impression numérique d'une décoration sur un matériau support avec au moins un ensemble de paramètres d'impression définis, dans lequel le procédé comprend les étapes consistant à
i. fournir une décoration analogique ;
ii. générer et enregistrer au moins une image numérique sous forme de données brutes de décoration numériques dans l'espace colorimétrique RVB à partir de la décoration analogique ;
iii. traiter numériquement au moins une partie des données brutes de décoration numériques dans l'espace colorimétrique RVB et générer des données brutes de décoration numériques traitées ;
iv. fournir au moins un ensemble de paramètres d'impression ;
v. transférer les données brutes de décoration numériques traitées et l'au moins un ensemble de paramètres d'impression à un logiciel de gestion de la couleur ou RIP et calculer les données de production profilées dans l'espace colorimétrique pour l'au moins un ensemble de paramètres d'impression à partir des données brutes de décor numériques traitées, dans lequel les données de production profilées dans l'espace colorimétrique sont présentes dans un modèle colorimétrique choisi dans le groupe présentant des modèles colorimétriques CMJN, CRJN, à une couleur, à cinq couleurs, à six couleurs, à sept couleurs et à huit couleurs ;
vi. calculer des données de séparation à partir des données de production profilées dans l'espace colorimétrique calculées pour l'au moins un ensemble de paramètres d'impression ;
vii. délivrer une image numérique de la décoration analogique avec les données de séparation calculées par une imprimante numérique sur un matériau support, dans lequel l'imprimante numérique est comprise dans l'au moins un ensemble de paramètres d'impression pour lequel les données de production profilées dans l'espace colorimétrique ont été calculées ;
dans lequel les paramètres d'impression à l'étape de procédé iv. présentent le type d'installation d'impression, le modèle colorimétrique avec lequel imprimer, la température, l'humidité de l'air, l'encre d'impression et le type de matériau support.

2. Procédé selon la revendication 1, **caractérisé en ce que** le matériau support est choisi dans un groupe présentant papier, verre, métal, films, matériaux dérivés du bois, matières plastiques et leurs combinaisons.

3. Procédé selon l'une des revendications précédentes, **caractérisé en ce que,** à l'étape de procédé ii., les données brutes de décoration numériques sont générées en photographiant la décoration analogique avec une caméra numérique ou en scannant la décoration analogique avec un scanner.

4. Procédé selon l'une des revendications précédentes, **caractérisé en ce que,** à l'étape de procédé iii., lors du traitement numérique de l'au moins une partie des données brutes de décoration, celles-ci sont retouchées.

5. Procédé selon la revendication 4, **caractérisé en ce que,** lors de la retouche,
• la nuance de couleur d'au moins une partie des données brutes de décoration est modifiée ; et/ou
• la luminosité d'au moins une partie des données brutes de décoration est modifiée ; et/ou
• la saturation d'au moins une partie des données brutes de décoration est modifiée ; et/ou
• le contraste d'au moins une partie des données brutes de décoration est modifié ; et/ou
• la netteté d'au moins une partie des données brutes de décoration est modifiée.

6. Procédé selon l'une des revendications précédentes, **caractérisé en ce que,** à l'étape de procédé iii., une partie ou la totalité des données brutes de décoration sont traitées numériquement.

7. Procédé selon l'une des revendications précédentes, **caractérisé en ce que** le traitement d'au moins une partie des données brutes de décoration numériques est effectué à l'étape de procédé iii. au moyen du logiciel Adobe Photoshop.

8. Procédé selon l'une des revendications précédentes, **caractérisé en ce que** les paramètres d'impression de l'étape de procédé iv. présentent en outre le prétraitement du matériau support.

9. Procédé selon l'une des revendications précédentes, **caractérisé en ce que,** à l'étape de procédé v., les données de production profilées dans l'espace colorimétrique sont calculées pour plus d'un ensemble de paramètres d'impression.

10. Procédé selon la revendication 9, **caractérisé en ce que,** à l'étape de procédé vi., les données de séparation respectives sont calculées à partir des données de production profilées dans l'espace colorimétrique calculées pour chaque ensemble de paramètres d'impression et, à l'étape de procédé vii. l'image numérique de la décoration analogique avec les données de séparation respectives calculées est délivrée par une imprimante numérique respective sur un matériau support, dans lequel l'imprimante numérique respective est comprise dans l'ensemble de paramètres d'impression pour lequel les données de production profilées dans l'espace colorimétrique et les données de séparation respectives ont été calculées.

11. Procédé selon l'une des revendications précédentes, **caractérisé en ce que** le matériau support est coloré avant l'impression.

12. Procédé selon l'une des revendications précédentes, **caractérisé en ce que** le matériau support est pourvu d'une couche de protection après l'impression.

13. Procédé selon l'une des revendications précédentes, **caractérisé en ce que** le matériau support est amené à une presse à cycle court après l'impression.

14. Procédé selon la revendication 13, **caractérisé en ce que** le matériau support imprimé est pourvu d'une structure de surface dans la presse à cycle court.
